Europäisches Patentamt

European Patent Office

Office européen des brevets

(11) Veröffentlichungsnummer: **0 114 801**
**B1**

(12) **EUROPÄISCHE PATENTSCHRIFT**

(45) Veröffentlichungstag der Patentschrift:
**11.05.88**

(51) Int. Cl.⁴: **B 65 G  59/06,** H 01 M  10/14

(21) Anmeldenummer: **84890016.3**

(22) Anmeldetag: **20.01.84**

(54) **Vorrichtung zum Vereinzeln von in einem Stapel angeordneten plattenförmigen Separatoren für Akkumulatoren oder dergleichen.**

(30) Priorität: **21.01.83  AT 202/83**

(43) Veröffentlichungstag der Anmeldung:
**01.08.84 Patentblatt 84/31**

(45) Bekanntmachung des Hinweises auf die Patenterteilung:
**11.05.88 Patentblatt 88/19**

(84) Benannte Vertragsstaaten:
**BE CH DE FR GB IT LI LU NL SE**

(56) Entgegenhaltungen:
**AT - A - 329 124**
**DE - A - 1 929 172**
**DE - A - 3 003 555**
**FR - A - 2 169 605**
**GB - A - 999 297**
**US - A - 4 026 000**

(73) Patentinhaber: **Akkumulatorenfabrik Dr. Leopold Jungfer, A-9181 Feistritz im Rosental (AT)**

(72) Erfinder: **Frey, Helmut, Ressnigweg 34, A-9170 Ferlach (AT)**

(74) Vertreter: **Holzer, Walter, Dipl.-Ing. et al, Patentanwälte Dipl.-Ing. Dr.techn. Schütz Alfred Dr.phil. Mrazek Engelbert Dipl.-Ing. Holzer Walter Dipl.-Ing. Pfeifer Otto Fleischmanngasse 9, A-1040 Wien (AT)**

**Beschreibung**

Die Erfindung betrifft eine Vorrichtung zum Vereinzeln von in einem Stapel angeordneten plattenförmigen Separatoren für Akkumulatoren od.dgl., mit einer Führungsleisten aufweisenden, gegenüber der Vertikalen geneigt angeordneten Stapelaufnahme und einer im unteren Bereich derselben angeordneten Ausbringeinrichtung, wobei die stirnseitige Führungsleiste der Stapelaufnahme einen sich über die Breite der Stapelaufnahme erstreckenden unteren Abschnitt aufweist, der mit einem den Stapel abstützenden Boden der Stapelaufnahme einen Austrittsspalt für die Separatoren begrenzt, und wobei die Ausbringeinrichtung mit einer parallel zum Austrittsspalt verlaufenden Austragwalze aus elastisch verformbarem Material versehen ist.

Es ist bereits eine Vorrichtung dieser Art bekannt (DE-A1-2 715 713), die in Verbindung mit einer Vorrichtung zum Umhüllen von Sammlerplatten mit wärmeverschweissbaren Separatoren angewendet wird. Bei dieser Vorrichtung werden die Separatoren mittels des pneumatisch oder hydraulisch hin- und herbewegbaren Bodens der Stapelaufnahme vereinzelt und zwischen zwei zusammenwirkende Förderwalzen bewegt, die mit Abstand vom Stapel angeordnet sind, weshalb auch eine mit der stirnseitigen Führungsleiste verbundene Plattenführung vorgesehen werden muss, die mit dem einen relativ grossen Hub ausführenden Boden der Stapelaufnahme zusammenwirkt. Der Nachteil dieser Ausführung besteht vor allem darin, dass sie konstruktiv aufwendig und nur zum Vereinzeln von Separatoren einer bestimmten Stärke geeignet ist, was sich besonders dann als nachteilig erweist, wenn Separatoren mit einer vorbestimmten Profilierung vereinzelt werden sollen.

Die Erfindung zielt nun darauf ab, eine Vorrichtung der einleitend angegebenen Art zu schaffen, die auf konstruktiv und steuerungstechnisch einfache Weise die Vereinzelung von Separatoren unterschiedlicher Stärke und Profilierung ermöglicht. Die erfindungsgemässe Vorrichtung zeichnet sich dadurch aus, dass der untere Abschnitt der stirnseitigen Führungsleiste der Stapelaufnahme mit einer von innen nach aussen abgeschrägten Unterkante versehen ist, die mit der parallel zum Austrittsspalt verlaufenden Austragwalze, welche vorzugsweise aus Schaumgummi od.dgl. besteht, in Eingriff steht, wobei der untere Abschnitt der stirnseitigen Führungsleiste gegen die Austragwalze verstellbar ist.

Mit dieser Vorrichtung, die mit geringen Kosten hergestellt werden kann sowie eine einfache und zuverlässige Betriebsweise ermöglicht, wird erreicht, dass Separatoren unterschiedlicher Stärke und Profilierung, d.h. z.B. glatte, mit Rippen versehene oder gewellte Separatoren, rasch und schonend vereinzelt werden können. Dabei kann die Vorrichtung nach Bedarf auf extreme Separatorstärken bzw. -ausbildungen durch Verstellung des unteren Abschnittes der stirnseitigen Führungsleiste gegen die Austragwalze hin verstellt werden. Für übliche Separatorplattenstärken ist diese Massnahme nicht erforderlich, es reicht vielmehr aus, wenn die abgeschrägte Unterkante der stirnseitigen Führungsleiste die Austragwalze berührt, die dann beim Austragen des jeweils untersten Separators im Ausmass der Stärke bzw. Profilierung des Separators zusammengedrückt wird.

Bei einer bevorzugten Ausführungsform der Erfindung ist ferner der Abstand der Vorderkante des Bodens der Stapelaufnahme von der Austragwalze einstellbar, wobei ausserdem der Boden der Stapelaufnahme mit dem unteren Abschnitt der stirnseitigen Führungsleiste verbunden sein kann. Auch diese Verstellung ist nur erforderlich, um bei extremen Separatorstärken eine einwandfreie Vereinzelung vornehmen zu können.

Gemäss einer Weiterbildung der Erfindung ist die Stapelaufnahme an ihrer Hinterseite zum Einbringen des Stapels offen. Vorteilhaft ist somit zur Anpassung der Stapelaufnahme an unterschiedliche Stapelgrössen nur mehr die Verstellung von seitlichen Führungsleisten erforderlich.

Die Erfindung wird nachfolgend an einem Ausführungsbeispiel unter Bezugnahme auf die Zeichnungen näher erläutert. Die

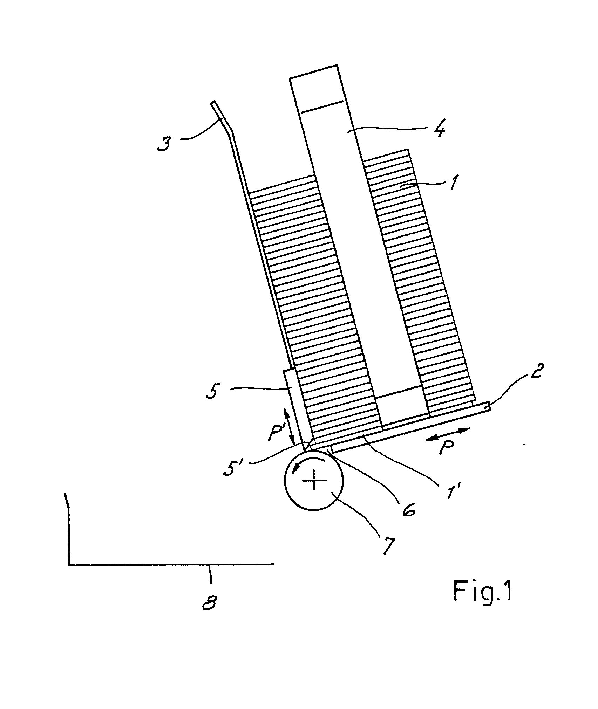

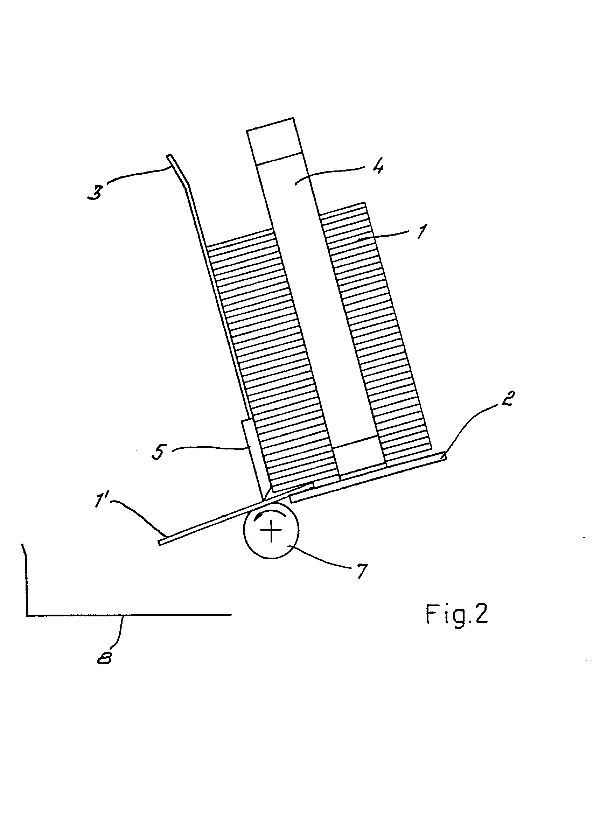

Figuren 1 und 2 zeigen die erfindungsgemässe Vorrichtung in schematischen Seitenansichten in zwei verschiedenen Phasen der Vereinzelung eines Separators.

Gemäss Figur 1 wird ein Stapel 1 von Separatorplatten in einer gegenüber der Vertikalen geneigt angeordneten Stapelaufnahme gehalten, die an ihrer Unterseite einen Boden 2 aufweist, auf welchem der Stapel 1 aufruht, sowie zumindest eine stirnseitige Führungsleiste 3 und zwei verstellbare seitliche Führungsleisten 4. Die Rückseite der Stapelaufnahme ist offen, um ein leichtes Beschicken derselben zu ermöglichen. Am unteren Ende der stirnseitigen Führungsleiste 3 ist eine sich über die gesamte Breite der Stapelaufnahme erstreckende Platte 5 befestigt, die ihrerseits an ihren seitlichen Enden (nicht gezeigt) mit dem Boden 2 verbunden ist. Die Unterkante 5' der Platte 5 ist nach aussen abgeschrägt und begrenzt mit dem Boden 2 einen Austrittsspalt 6 für den jeweils untersten Separator 1' des Stapels. Die Unterkante 5' steht mit einer unterhalb der Platte 5 angeordneten ortsfesten Austragwalze 7 aus elastisch verformbarem Material, insbesondere aus Schaumgummi, in Eingriff, die sich über die Länge des Austrittsspaltes 6 erstreckt. Die Oberseite des Bodens 2 liegt etwas tiefer als die mit der Unterkante 5' in Eingriff gelangende Erzeugende der Austragwalze 7, um einen einwandfreien Eingriff des jeweils untersten Separators mit der Austragwalze zu sichern, wie dies nachfolgend erläutert wird.

Wie Figur 1 zeigt, gelangt der jeweils unterste Separator 1' des Stapels 1 mit seiner Vorderkante an der Abschrägung der Unterkante 5' zur Anlage und zugleich mit der Austragwalze 7 in Eingriff. Wird nun die Walze 7 mittels eines nicht gezeigten, intermittierenden Drehantriebes in der Pfeilrichtung gedreht, so wird der Separator 1' von der

Austragwalze 7 mitgenommen, u.zw. deshalb, weil die Reibung zwischen der Austragwalze 7 und dem untersten Separator 1' grösser ist als zwischen dem untersten Separator 1' und dem darüberliegenden Stapel 1. Da die Unterkante 5' an der Austragwalze 7 angreift, wird diese bei der Mitnahme des Separators 1' entsprechend der Stärke oder Profilierung desselben etwas zusammengedrückt, wie dies Figur 2 zeigt.

Die Austragwalze 7 wird mittels einer nicht gezeigten Steuereinrichtung, die z.B. über eine die hintere Kante des Separators abtastende Lichtschranke od.dgl. betätigt wird, in jedem Austragzyklus jeweils so lange gedreht, bis der Separator in den Bereich einer vor der Austragwalze 7 angeordneten Auffangschale 8 gelangt ist.

Die Durchmesser des Kernes der Austragwalze 7 und der auf diesem angeordneten Schicht aus elastisch zusammendrückbarem Material werden so gewählt, dass die elastische Schicht bei keiner Separatorstärke vollständig zusammengedrückt wird.

Das erläuterte Ausführungsbeispiel kann im Rahmen des allgemeinen Erfindungsgedankens verschiedentlich abgewandelt werden. So kann die Platte 5 für sich in Richtung des Doppelpfeiles P' in Figur 1 höhenverstellbar montiert sein und zur Vereinzelung sehr dünner Separatoren, z.B. von 1 bis 2 mm dicken Separatorplatten, gegen die Austragwalze 7 hin so nachgestellt werden, dass die Unterkante 5' der Platte 5 in die Austragwalze 7 eindringt, um eine ausreichende Reibungsmitnahme der Separatoren zu gewährleisten. Ferner kann der Boden 2, an welchem die Platte 5 befestigt ist, gegen die ortsfeste Austragwalze 7 hin und von dieser weg in Richtung des Doppelpfeiles P in Figur 1 verstellbar sein, um unterschiedlichen Separatorstärken Rechnung zu tragen. Die vorstehenden Verstellmöglichkeiten sind vor allem für Extremfälle bestimmt, denn die erfindungsgemässe Konstruktion gestattet infolge der Zusammendrückbarkeit der Austragwalze 7 die Vereinzelung von Separatoren innerhalb eines relativ grossen Stärkenbereiches ohne das Erfordernis einer Verstellung. Zweckmässig sitzt die Platte 5 an ihren nicht gezeigten seitlichen Enden auf vom Boden 2 nach oben ragenden Bolzen, die in entsprechende Öffnungen in der Platte 5 eingreifen, so dass die Platte 5 gegenüber dem Boden und somit relativ zur Austragwalze 7 eingestellt werden kann.

## Patentansprüche

1. Vorrichtung zum Vereinzeln von in einem Stapel (1) angeordneten plattenförmigen Separatoren für Akkumulatoren od.dgl., mit einer Führungsleisten (3) aufweisenden, gegenüber der Vertikalen geneigt angeordneten Stapelaufnahme und einer im unteren Bereich derselben angeordneten Ausbringeinrichtung, wobei die stirnseitige Führungsleiste (3) der Stapelaufnahme einen sich über die Breite der Stapelaufnahme erstreckenden unteren Abschnitt (3) aufweist, der mit einem den Stapel (1) abstützenden Boden (2) der Stapelaufnahme einen Austrittsspalt (6) für die Separatoren begrenzt, und wobei die Ausbringeinrichtung mit einer parallel zum Austrittsspalt (6) verlaufenden Austragwalze (7) aus elastisch verformbarem Material versehen ist, dadurch gekennzeichnet, dass der untere Abschnitt (5) der stirnseitigen Führungsleiste (3) der Stapelaufnahme mit einer von innen nach aussen abgeschrägten Unterkante (5') versehen ist, die mit der parallel zum Austrittsspalt (6) verlaufenden Austragwalze (7), welche vorzugsweise aus Schaumgummi od.dgl. besteht, in Eingriff steht, wobei der untere Abschnitt (5) der stirnseitigen Führungsleiste (3) gegen die Austragwalze (7) verstellbar ist.

2. Vorrichtung nach Anspruch 1, dadurch gekennzeichnet, dass der Abstand der Vorderkante des Bodens (2) der Stapelaufnahme von der Austragwalze (7) einstellbar ist.

3. Vorrichtung nach Anspruch 2, dadurch gekennzeichnet, dass der Boden (2) der Stapelaufnahme mit dem unteren Abschnitt (5) der stirnseitigen Führungsleiste (3) verbunden ist.

4. Vorrichtung nach einem der Ansprüche 1 bis 3, dadurch gekennzeichnet, dass die Stapelaufnahme an ihrer Hinterseite zum Einbringen des Stapels (1) offen ist.

## Claims

1. Device for sequentially dispensing plate-shaped separators on the like, disposed in a stack (1), for accumulators, comprising a stack seating possessing guide bars (3) and inclined to the vertical, and an extraction device disposed in the lower region of same, wherein the front guide bar (3) of the stack seating possesses a lower portion (5) extending across the width of the stack seating, which portion defines, together with a base (2) of the stack seating carrying the stack (1), a discharge gap (6) for the separators, and wherein the extraction device is equipped with an extraction roller (7) of elastically deformable material, extending parallel to the discharge gap (6), characterized in that the lower portion (5) of the front guide bar (3) of the stack seating is furnished with a lower edge (5') chamfered from the inside towards the outside, which is in engagement with the extraction roller (7), extending parallel to the discharge gap (6), which roller is preferably of foam rubber or the like, the lower portion (5) of the front guide bar (3) being adjustable with respect to the extraction roller (7).

2. Device according to Claim 1, characterized in that the distance of the front edge of the base (2) of the stack seating from the extraction roller (7) is adjustable.

3. Device according to Claim 2, characterized in that the base (2) of the stack seating is connected with the lower portion (5) of the front guide bar (3).

4. Device according to one of Claims 1 to 3, characterized in that the stack seating is open at its rear face for the introduction of the stack (1).

## Revendications

1. Dispositif pour détacher des plaques séparatrices d'accumulateurs ou analogues, disposées sous forme d'une pile (1), comprenant un compartiment de logement de pile muni d'une plaque de guidage (3) et incliné par rapport à la verticale, et un dispositif d'enlèvement disposé dans sa région inférieure, la plaque de guidage (3) située du côté frontal du compartiment de logement de pile comprenant une section inférieure (5) s'étendant sur la largeur du compartiment de logement de pile, section qui limite avec un fond (2) du compartiment de logement de pile sur lequel s'appuie la pile (1) un interstice de sortie (6) pour les séparateurs, et le dispositif d'enlèvement étant muni d'un cylindre d'extraction disposé parallèlement à l'interstice de sortie (6) et constitué en un matériau élastiquement déformable, caractérisé en ce que la section inférieure (5) de la plaque de guidage (3) située sur le côté frontal du compartiment de logement de pile est munie d'un bord inférieur (5') biseauté de l'intérieur vers l'extérieur, qui coopère avec le cylindre d'extraction (7) qui est monté parallèlement à l'inerstice de sortie (6) et qui est constitué de préférence en caoutchouc mousse ou analogue, la section inférieure (5) de la plaque de guidage (3) située sur le côté frontal pouvant être réglée par rapport au cylindre d'extraction (7).

2. Dispositif selon la revendication 1, caractérisé en ce que la distance entre le bord avant du fond (2) du compartiment de logement de pile et le cylindre d'extraction (7) est réglable.

3. Dispositif selon la revendication 2, caractérisé en ce que le fond (2) du compartiment de logement de pile est relié à la section inférieure (5) de la plaque de guidage (3) située du côté frontal.

4. Dispositif selon l'une quelconque des revendications 1 à 3, caractérisé en ce que le compartiment de logement de pile est ouvert sur son côté arrière pour l'introduction de la pile (1).

Fig.1

Fig.2